# EUROPÄISCHE PATENTANMELDUNG

(11) **EP 0 733 684 A2**
(43) Veröffentlichungstag der Anmeldung: **25.09.1996**
(21) Anmeldenummer: 96103753.8
(22) Anmeldetag: 11.03.1996
(51) Int. Cl.: C09D 11/10, C08G 8/30

(54) **Modifizierte Bindemittelharze für Druckfarben**

(30) Priorität: 17.03.1995 DE 19509648
(71) Anmelder: Vianova Resins GmbH, D-55252 Mainz-Kastel (DE)
(72) Erfinder: Bender, Albert, Dr., D-55130 Mainz (DE); Bothe, Lothar, Dr., D-55124 Mainz (DE); Giencke, Astrid, Dr., D-65719 Hofheim (DE)

(57) **Zusammenfassung**

Toluol-lösliche modifizierte Bindemittelharze, die durch Umsetzung von mindestens jeweils einer Verbindung aus den Substanzgruppen
A) fossile Terpenharze,
B) α,β-ethylenisch ungesättigte Carbonsäuren und deren Anhydride,
C) Phenole, die gegenüber Oxoverbindungen mehrfachfunktionell sind,
D) Aldehyde und Aldehydacetale,
E) Alkohole mit mindestens zwei Hydroxylgruppen,
F) einwertige und zweiwertige Metallverbindungen
sowie gegebenenfalls von weiteren Verbindungen aus den Substanzgruppen
G) Fettsäuren und Fette,
H) ethylenisch ungesättigte Kohlenwasserstoffharze,
I) Naturharze und Naturharzsäuren
bei einer Temperatur von 100 bis 300 °C unter Wasserabspaltung erhalten werden, sind in Druckfarben vorzugsweise für den Illustrationstiefdruck mit Toluol einsetzbar.

## Beschreibung

Die vorliegende Erfindung betrifft Bindemittelharze für Farben, die durch Umsetzung von fossilen Terpenharzen mit α,β-olefinisch ungesättigten Carbonsäuren oder deren Anhydriden, Phenolharz, Veresterungsmittel, Veresterungskatalysatoren und gegebenenfalls weiteren Modifizierungsmitteln hergestellt werden, sowie deren Verwendung für Druckfarben für den Illustrationstiefdruck.

Bindemittelharze für Tiefdruckfarben mit Toluol werden überwiegend durch Modifizierung von Naturharzen oder Naturharzsäuren, die im Kolophonium vorhanden sind, hergestellt (DE-A 41 36 316, EP-A 0 214 526). Dieses besteht bekanntlich zu ca. 90 Gew.-% aus isomeren Naturharzsäuren und bis zu ca. 10 Gew.-% aus unverseifbaren Anteilen.

Diese Druckfarben auf Basis Phenolharz-modifizierter Kolophoniumharze ergeben rasch trocknende Farben, die nach dem Drucken relativ schnell verspröden. Dies kann jedoch zum Reißen des Farbfilms führen, wenn der Bedruckstoff an der bedruckten Fläche gefaltet wird. Desgleichen neigen die Farbfilme wegen der Sprödigkeit zu einer ungenügenden Scheuerfestigkeit. Durch Additive läßt sich zwar die Elastizität der Farbfilme erhöhen, bekanntlich können diese jedoch zu einer verlangsamten Trocknung und unerwünschtem Nachkleben führen.

Es ist bekannt, daß Terpenharze, die durch Modifizierung von polymerisiertem oder copolymerisiertem Pinen hergestellt werden, elastifizierende Eigenschaften besitzen und als Bindemittelharze für Druckfarben eingesetzt werden können (SU-A 1 073 249 und EP-A 0 610 632). Ein Nachteil dieser Verbindungen ist ihre relativ hohe Empfindlichkeit gegenüber Modifizierungsreaktionen. Beispielsweise ist es schwierig, Säuregruppen einzuführen, die sich in Analogie zum Kolophonium mit Metallverbindungen zu Resinaten umsetzen lassen. Solche Resinatstrukturen sind aber insbesondere zur optimalen Benetzung für die im Tiefdruck mit Toluol verwendeten Pigmente außerordentlich wichtig. Zusätzlich weisen diese Systeme in Farben für den Tiefdruck mit Toluol ein ungünstiges Wegschlageverhalten auf, das zum Glanzverlust im Druck führt. Diese Nachteile schränken die Verwendbarkeit modifizierter Terpenharze für den Tiefdruck mit Toluol ein.

Es bestand daher die Aufgabe, einen Rohstoff zur Bindemittelharzherstellung für Druckfarben bereitzustellen, mit dem sich Druckfarben herstellen lassen, die beim Verdrucken hochglänzende, rasch trocknende und elastische Farbfilme mit guter Scheuerfestigkeit ergeben.

Diese Aufgabe konnte erfindungsgemäß dadurch gelöst werden, daß zur Herstellung dieser Bindemittelharze für Druckfarben fossile Terpenharze verwendet werden. Die infrage kommenden fossilen Terpenharze werden nach bekannten Methoden zusammen mit Paraffinen, die zur Wachsherstellung verwendet werden, durch Extraktion aus Braunkohle gewonnen. Sie fallen dann nach ihrer Abtrennung von den Paraffinen als Nebenprodukt an. Sie enthalten hauptsächlich Naturharzsäuren, Oxyharzsäuren, Terpene und Polyterpene, sowie Terpen- und Polyterpenalkohole und in untergeordneten Mengen Schwefelverbindungen (Fette, Seifen, Anstrichmittel, 57. Jahrgang, Nr. 5, S. 329 - 335 (1955)).

Gegenstand der vorliegenden Erfindung sind also modifizierte Bindemittelharze, herstellbar durch Umsetzung von mindestens jeweils einer Verbindung aus den Substanzgruppen
A) fossile Terpenharze
B) α,β-ungesättigte Carbonsäuren und deren Anhydride
C) Phenole, die gegenüber Oxoverbindungen mehrfachfunktionell sind,
D) Aldehyde und Aldehydacetale,
E) Alkohole mit mindestens zwei Hydroxylgruppen
F) einwertige und zweiwertige Metallverbindungen
sowie gegebenenfalls von weiteren Verbindungen aus den Substanzgruppen
G) Fettsäuren und Fettsäureester,
H) ethylenisch ungesättigte Kohlenwasserstoffharze,
I) Naturharze und Naturharzsäuren
bei einer Temperatur von 100 bis 300 °C unter Wasserabspaltung.

Als Verbindungen der Substanzgruppen A) bis I) finden vorzugsweise Verwendung:
A) Fossile Terpenharze mit einem Gehalt an
   Harzsäuren zwischen 0,1 und 45 Gew.-%, insbesondere zwischen 15 und 45 Gew.-%,
   Oxyharzsäuren zwischen 15 und 45 Gew.-%,
   Terpenen und Polyterpenen zwischen 15 und 45 Gew.-%,
   Terpen- und Polyterpenalkoholen zwischen 5 und 20 Gew.-%
   und einem durch die üblichen Elementaranalysen ermittelten Gehalt an Kohlenstoff zwischen 70 und 80 Gew.-%,
   Wasserstoff zwischen 8 und 12 Gew.-%,
   Sauerstoff zwischen 8 und 14 Gew.-%,
   Schwefel zwischen 0,5 und 4 Gew.-%,
B) α,β-ethylenisch ungesättigte Carbonsäuren und deren Anhydride, insbesondere Fumarsäure, Maleinsäure, Maleinsäureanhydrid, Itakonsäure, Zimtsäure, Acrylsäure, Methacrylsäure,
C) Phenole, die gegenüber Oxoverbindungen mehrfachfunktionell sind, insbesondere Phenol, (C₁-C₁₂)-Alkylphenole, Aryl-, Aralkylphenole, Kresole, 1,3,5-Xylenole, Isopropyl-, p-tert.Butyl-, Amyl-, Oktyl-, Nonylphenol, Diphenylolpropan, Phenylphenol, Cumylphenol, sowie Additionsprodukte aus diesen Phenolen und ethylenisch ungesättigten Monomeren, vorzugsweise α-Methylstyrol, α-Chlorstyrol, Vinyltoluol, Cyclopentadien,
D) aliphatische (C₁-C₇)-Aldehyde, insbesondere Formaldehyd in seinen verschiedenen monomeren, oligomeren und polymeren Formen, Acetaldehyd, Butyraldehyd, Isobutyraldehyd, ferner Benzaldehyd, Furfurol, Glyoxal,
E) mindestens zwei Hydroxylgruppen enthaltende Alkohole, insbesondere bifunktionelle, beispielsweise Glykole, oder trifunktionelle, beispielsweise Trimethylolethan, Trimethylolpropan, Glycerin, oder tetrafunktionelle, beispielsweise Pentaerythrit, oder pentafunktionelle, beispielsweise dimerisiertes Trimethylolpropan, oder hexafunktionelle Alkohole, beispielsweise dimerisiertes Pentaerythrit,
F) Lithium-, Natrium-, Kalium-, Magnesium-, Calcium- oder Zinkverbindungen oder Gemische davon, insbesondere Oxide, Hydroxide, Carbonate, Hydrogencarbonate, Acetate, Stearate,
G) tierische und pflanzliche Fettsäuren, oder durch Raffination gewonnene Fettsäuren, ferner Fettsäureester, insbesondere Fettsäureglycerinester in Form von vegetabilischen oder tierischen Ölen, beispielsweise Tallöl, Baumwollsaatöl, Sojaöl, Leinöl, Holzöl, Fischöl, Kokosfett, hydriertes Kokosfett,
H) Polymere oder Oligomere aus einfach und/oder mehrfach ethylenisch ungesättigten (C₅-C₉)-Kohlenwasserstoffen, insbesondere aus der Gruppe Isopren, Cyclopentadien, Inden, Cumaron, Styrol, ferner Copolymerisate von ethylenisch ungesättigten Kohlenwasserstoffharzen mit Naturharzen oder Naturharzsäuren,
I) Kolophonium, disproportioniertes Kolophonium, hydriertes Kolophonium, polymerisiertes Kolophonium, Tallharz.

Gegenstand der Erfindung ist auch die Herstellung dieser modifizierten Bindemittelharze durch Umsetzung der Komponenten A) bis F) und gegebenenfalls G) und/oder H) und/oder I). Vorzugsweise beträgt der Anteil der einzelnen Komponenten, bezogen auf die Gesamtmenge der eingesetzten Komponenten (entspricht 100 Gew.-%),
30 bis 95 Gew.-%, vorzugsweise 40 bis 90 Gew.-%, insbesondere 50 bis 80 Gew.-%, fossile Terpenharze aus der Substanzgruppe A),
0,1 bis 20, vorzugsweise 2 bis 10 Gew.-%, α,β-ethylenisch ungesättigte Carbonsäuren oder deren Anhydride aus der Substanzgruppe B),
1 bis 45 Gew.-%, vorzugsweise 5 bis 40 Gew.-%, insbesondere 10 bis 35 Gew.-%, Phenole der Substanzgruppe C),
1 bis 20 Gew.-%, vorzugsweise 3 bis 10 Gew.-%, insbesondere 5 bis 8 Gew.-%, Aldehyde oder Aldehydacetale aus der Substanzgruppe D),
bei einem Molverhältnis der Phenolkomponente C) zur Aldehydkomponente D), das vorzugsweise im Bereich von 1:0,9 bis 1:4,5, insbesondere 1:1 bis 1:2,5 liegt,
oder anstelle der Komponenten aus den Substanzgruppen C) und D) oder anteilig mit diesen, vorzugsweise bis zu 65 Gew.-%, aus Verbindungen der Substanzgruppen C) und D) separat hergestellte Kondensationsprodukte, vorzugsweise Phenolresole,
1 bis 20 Gew.-%, vorzugsweise 3 bis 15 Gew.-%, insbesondere 4 bis 10 Gew.-%, Alkohole aus der Substanzgruppe E),
0,01 bis 10 Gew.-%, vorzugsweise 0,1 bis 8 Gew.-%, insbesondere 0,3 bis 5 Gew.-%, berechnet als Oxid, einwertige oder zweiwertige Metallverbindungen aus der Substanzgruppe F),
0 bis 40 Gew.-%, vorzugsweise 1 bis 10 Gew.-%, Fettsäuren oder Fettsäureester aus der Substanzgruppe G),
0 bis 30 Gew.-%, vorzugsweise 1 bis 25 Gew.-%, insbesondere 2 bis 10 Gew.-%, Kohlenwasserstoffharze aus der Substanzgruppe H), und
0 bis 80 Gew.-%, vorzugsweise 0,5 bis 60 Gew.-%, insbesondere 1 bis 50 Gew.-% Naturharze oder Naturharzsäuren aus der Substanzgruppe I).

Zur Herstellung werden die in der Naturharzchemie üblichen Apparaturen verwendet. Die erfindungsgemäßen Produkte können dabei nach diskontinuierlichen wie auch kontinuierlichen Verfahren hergestellt werden.

Dabei wird vorzugsweise fossiles Terpenharz vorgelegt, das zur Harzmodifizierung mit der α,β-ungesättigten Carbonsäure oder dessen Anhydrid umgesetzt wird. Die dabei benötigten Reaktionstemperaturen liegen vorzugsweise zwischen 120 und 220 °C. Die Reaktion ist gewöhnlich nach spätestens einer Stunde beendet. Gegebenenfalls können danach zur weiteren Harzmodifizierung Fettsäuren, ethylenisch ungesättigte Kohlenwasserstoffharze oder Gemische davon, zugegeben werden. Dann werden die entsprechende Metallverbindung oder Gemische davon, Polyol, Phenol und Aldehyd eingetragen. Anstelle von Phenol und Aldehyd oder auch anteilig mit diesen kann auch ein separat nach bekannten Methoden aus Phenolen und Aldehyden in Gegenwart basischer Katalysatoren bei einer Temperatur von 50 bis 160 °C, vorzugsweise 60 bis 100 °C, bei Normaldruck oder erhöhtem Druck hergestelltes Kondensationsprodukt, vorzugsweise ein Phenolresol, eingesetzt werden. Danach wird die Kondensation im Temperaturbereich von ca. 130 bis 160 °C begonnen. Wird das Resol erst in der Schmelze aus den Komponenten Phenol und Aldehyd in situ hergestellt, wird üblicherweise unter einem Druck von bis zu 10 bar gearbeitet. Bei ausschließlicher Verwendung eines Resols wird vorzugsweise drucklos gearbeitet. Anschließend wird unter Destillation des Reaktionswassers auf Temperaturen von 200 bis 280 °C erhitzt. Dabei kann der Fortgang der Reaktion zweckmäßigerweise durch die Bestimmung der Säurezahl verfolgt werden. So kann die Säurezahl des Harzgemisches anfangs vorzugsweise bis zu 200 mg/g Harz betragen, ermittelt nach den üblichen Methoden. Sie fällt mit fortschreitender Umsetzung unter Wasserabspaltung fortlaufend ab. Dann wird die Veresterungsreaktion solange unter Destillation von Wasser, die auch unter azeotropen Bedingungen unter Verwendung eines inerten Schleppmittels, beispielsweise Xylol, erfolgen kann, fortgesetzt, bis die erfindungsgemäße Umsetzung das gewünschte Endstadium erreicht hat. Dieses ist gewöhnlich nach einer Reaktionsdauer von sechs bis acht Stunden erreicht. Zur Kontrolle wird dieses dann zweckmäßigerweise durch Bestimmen der Viskositätswerte in Toluol ermittelt. Gegebenenfalls werden flüchtige Anteile, einschließlich des Schleppmittels, durch Destillation, zuletzt unter Vakuum, aus dem Reaktionsprodukt entfernt. Sofern diese flüchtigen Anteile nicht stören, können sie jedoch auch im Harz belassen werden. Die erfindungsgemäßen Bindemittelharze können danach nach Abkühlen als Feststoff, beispielsweise in groben Stücken wie auch in Schuppenform, isoliert werden.

Es ist jedoch auch möglich, die erfindungsgemäßen Bindemittelharze nach der eigentlichen Umsetzung durch Zugabe weiterer Stoffe zu bearbeiten. Beispielsweise ist die Verdünnung der Harzschmelze mit Toluol oder hochsiedendem Mineralöl möglich, wobei alle Übergänge zwischen einem festen und flüssigem Firnis gegeben sind. Andererseits ist zur Optimierung von Viskositäten oder Verträglichkeiten auch die Zugabe niedermolekularer Bestandteile, beispielsweise Kolophonium, Kolophoniumester, vegetabile Öle oder hochsiedende Mineralöle, oder Polymere, beispielsweise Alkydharze, Phenolharze, phenolharzmodifizierte Kolophoniumharze, Kohlenwasserstoffharze oder Mischungen davon, möglich. Jeder dieser Bearbeitungsschritte kann für sich alleine oder in Kombination mit anderen Bearbeitungsschritten durchgeführt werden.

Überraschenderweise ist es auch möglich, den fossilen Terpenharzen vor Beginn der eigentlichen Umsetzung anteilig Naturharze und/oder Naturharzsäuren der Komponente I) zuzusetzen, und das entstandene Gemisch in die Modifizierungsreaktionen einzusetzen, ohne daß die günstigen Eigenschaften der erhaltenen Harze verloren gehen. Dies ist ein außerordentlicher Vorteil. Dabei kann das Mischungsverhältnis innerhalb weiter Grenzen schwanken, wobei der Anteil an fossilem Terpenharz mindestens 20 Gew.-% beträgt.

Die fossilen Terpenharze besitzen aufgrund der darin enthaltenen Schwefelverbindungen einen unangenehmen Eigengeruch. Es war daher überraschend, daß sich durch die erfindungsgemäße Reaktion Produkte herstellen lassen, die weitgehend geruchsarm sind. Besonders günstig verhalten sich Produkte, die unter Verwendung von Zinkverbindungen hergestellt werden. Solche Bindemittelharze sind daher besonders bevorzugt.

Das Molekulargewicht der erfindungsgemäßen Harze kann durch Gelpermeationschromatographie der Harzlösungen in Tetrahydrofuran (THF) an Polystyrolschaum in einem Permeationsmeßgerät nach bekannten Methoden ermittelt werden. Das mittlere Molekulargewicht (Gewichtsmittel M_{w}) der erfindungsgemäßen Harze liegt gemäß den erhaltenen Meßergebnisssen vorzugsweise bei Werten von M_{w} > 1000 und ist nach oben nicht kritisch begrenzt. Besonders bevorzugt liegt das mittlere Molekulargewicht M_{w} jedoch zwischen 2.000 und 40.000, insbesondere zwischen 2.500 und 25.000 g/mol.

Zur Bestimmung der Viskositäten werden die erfindungsgemäßen Harze in Toluol gelöst und mit einem üblichen Rotationsviskosimeter bei 23 °C vermessen. Beispielsweise liegen die Viskositäten 25 Gew.-%iger toluolischer Lösungen vorzugsweise in einem Bereich von 3 bis 100 mPa·s, insbesondere von 4 bis 50 mPa·s.

Weiterer Gegenstand der Erfindung ist die Verwendung der erfindungsgemäßen Harze als Bindemittelharze in Pigmentanreibungen und -konzentraten sowie in Druckfarben, vorzugsweise für den Illustrationstiefdruck mit Toluol als Lösemittel. Die erfindungsgemäßen Harze weisen eine ausgezeichnete Verträglichkeit mit anderen Bindemitteln, beispielsweise mit Naturharzsäureestern des Standes der Technik, Resinaten oder Kohlenwasserstoffharzen auf. Sie besitzen darüber hinaus ein ausgezeichnetes Benetzungsverhalten für die im Illustrationstiefdruck verwendeten Pigmente.

Die Toluol enthaltenden Tiefdruckfarben werden nach den üblichen Methoden formuliert. Dazu wird das geeignete Bindemittelharz in Toluol gelöst und dieser Firnis pigmentiert oder eine vorab hergestellte Pigmentanreibung mit Toluol verdünnt. Als Zuschlagstoffe können die sonst üblichen, beispielsweise Füllstoffe, wie Calciumcarbonat, oder grenzflächenaktive Mittel zur Verbesserung der Pigmentdispersion, wie Lecithin, oder Wachse zur Verbesserung der Scheuerfestigkeit, mitverwendet werden.

Die Erfindung wird durch die nachfolgenden Beispiele näher erläutert, ohne sie jedoch einzuschränken. Die in den Beispielen angegebenen Teile und Prozente beziehen sich auf das Gewicht, soweit nicht anders vermerkt.

### Beispiel 1

In einem heizbaren 2l-Mehrhalskolben mit Rührwerk. Thermometer, Tropftrichter, Rückflußkühler und Einfüllrohr werden unter einer Stickstoffatmosphäre 967 g fossiles Terpenharz mit einer Säurezahl von 35 mg/g und 48 g Maleinsäureanhydrid eine Stunde bei 160 °C erhitzt. Dann werden bei dieser Temperatur 25 g Zinkoxid, 40 g Pentaerythrit, und 16 g Glycerin zugegeben. Sodann werden 74 g eines wäßrigen Phenol-Formaldehyd-Kondensationsprodukts (70 %ig in Wasser, Viskosität 350 mPa·s) sowie 67 g eines wäßrigen p-t-Butylphenol-Formaldehyd-Kondensationsprodukt (70 %ig in Wasser, Viskosität 250 mPa·s) innerhalb einer Stunde zugetropft. Dabei beginnt bereits Wasser abzudestillieren. Dann wird auf 250 °C erhitzt, wobei ständig Wasser destilliert wird. Man läßt noch fünf Stunden nachrühren und evakuiert dann zur Entfernung flüchtiger Anteile 1h bei 100 mbar. Nach Aufheben des Vakuums mit Stickstoff werden 1130 g eines spröden, pulverisierbaren Harzes mit dem Erweichungspunkt von 115 °C erhalten. Eine 25 %ige Lösung in Toluol besitzt bei 23 °C eine Viskosität von 3,5 mPa·s und eine 50 %ige Lösung eine Viskosität von 840 mPa·s. Durch Gelpermeationschromatographie wird ein mittleres Molekulargewicht M_{w} von 3200 g/mol ermittelt. Die Reaktionszeit zur Herstellung beträgt 9 Stunden.

### Beispiel 2

Man verfährt wie in Beispiel 1 angegeben, mit der Abänderung, daß statt 967 g fossilem Terpenharz ein Gemisch aus 480 g fossilem Terpenharz und 490 g Kolophonium und zur Veresterung 88 g Pentaerythrit verwendet werden. Ausbeute: 1135 g; Fp.: 142 °C; Viskosität (50 %ig in Toluol): 1210 mPa·s; Viskosität (25 %ig in Toluol): 3,5 mPa·s; M_{w}: 7600 g/mol.

### Beispiel 3

Man verfährt wie in Beispiel 2 angegeben, mit der Abänderung, daß statt Zinkoxid 17 g Calciumhydroxid eingesetzt werden. Ausbeute: 1138 g; Fp.: 145 °C; Viskosität (50 %ig in Toluol): 180 mPa·s; Viskosität (25 %ig in Toluol): 3,5 mPa·s; M_{w}: 6500 g/mol.

### Beispiel 4

Man verfährt wie in Beispiel 2 angegeben, mit der Abänderung, daß der Mischung aus fossilem Terpenharz und Kolophonium noch 25 g eines Kohlenwasserstoffharzes auf Cyclopentadienbasis hinzugefügt werden. Ausbeute: 1155 g; Fp.: 148 °C; Viskosität (50 %ig in Toluol): 320 mPa·s; Viskosität (25 %ig in Toluol): 3,7 mPa·s; M_{w}: 6800 g/mol.

### Anwendungstechnisches Beispiel

Nach üblichen Verfahren werden jeweils aus den Bindemittelharzen des Beispiels 1 (Farbe A), des Beispiels 2 (Farbe B), einem handelsüblichen Phenolharzmodifizierten Naturharzsäureester (Vergleichsharz 1: Zinkgehalt, bestimmt als ZnO, 4,5 Gew.-%; Viskosität (50 %ig in Toluol) bei 23 °C 540 mPa·s (Farbe C)) und einem modifizierten Terpenharz nach EP-A 0 610 632 /Beispiel 14 (Vergleichsharz 2: Viskosität (50 %ig in Toluol bei 23 °C): 550 mPa·s (Farbe D)) nach den üblichen Methoden durch Dispergieren einer Mischung von
24 g Bindemittelharz
9 g Pigment ®Litholrubin (Rotpigment, BASF AG)
67 g Toluol
Farben für den Illustrationstiefdruck hergestellt und im Tiefdruckverfahren Papier bedruckt.
Der Glanz der Andrucke, der für ein gutes drucktechnisches Ergebnis möglichst hoch sein sollte, wird sodann mit dem Laborreflektometer nach Lange bei einem Einstrahlwinkel von 60 ° gemessen.

Die Scheuerfestigkeit der Druckfilme wird mit dem Gerät Prüfbau-Quadrant bei 50 Hüben und einer Belastung von 600 g bestimmt und mit Noten von 1 bis 6 bewertet. 1 bedeutet dabei eine sehr gute, 6 eine sehr schlechte Scheuerfestigkeit.

| Farbe | A | B | C | D |
|---|---|---|---|---|
| Glanz (%) | 60 | 61 | 53 | 51 |
| Scheuerfestigkeit | 2 | 2 | 4 | - |

Die mit den erfindungsgemäßen Harzen hergestellten Farben, die sich gut verdrucken lassen und rasch auftrocknen, zeigen die günstigsten Glanzwerte und günstigere Scheuerfestigkeiten als das Kolophoniumharz des Standes der Technik.

## Patentansprüche

1. Toluol-lösliche modifizierte Bindemittelharze, herstellbar durch Umsetzung von mindestens jeweils einer Verbindung aus den Substanzgruppen
A) fossile Terpenharze,
B) α,β-ethylenisch ungesättigte Carbonsäuren und deren Anhydride,
C) Phenole, die gegenüber Oxoverbindungen mehrfachfunktionell sind,
D) Aldehyde und Aldehydacetale,
E) Alkohole mit mindestens zwei Hydroxylgruppen,
F) einwertige und zweiwertige Metallverbindungen
sowie gegebenenfalls von weiteren Verbindungen aus den Substanzgruppen
G) Fettsäuren und Fette,
H) ethylenisch ungesättigte Kohlenwasserstoffharze,
I) Naturharze und Naturharzsäuren
bei einer Temperatur von 100 bis 300 °C unter Wasserabspaltung.

2. Modifizierte Bindemittelharze nach Anspruch 1, dadurch gekennzeichnet, daß sie ein mittleres Molekulargewicht (Gewichtsmittel M_{w}) im Bereich zwischen 2000 und 40.000 g/mol aufweisen.

3. Modifizierte Bindemittelharze nach Anspruch 1, dadurch gekennzeichnet, daß die Viskosität einer 25 Gew.-%igen toluolischen Lösung, gemessen im Rotationsviskosimeter bei 23 °C, 3 bis 100 mPa·s beträgt.

4. Verfahren zur Herstellung von modifizierten Bindemittelharzen nach Anspruch 1, dadurch gekennzeichnet, daß
30 bis 95 Gew.-% fossile Terpenharze aus der Substanzgruppe A),
0,1 bis 20 Gew.-% α,β-ethylenisch ungesättigte Carbonsäuren oder deren Anhydride aus der Substanzgruppe B),
1 bis 45 Gew.-% Phenole aus der Substanzgruppe C),
1 bis 20 Gew.-% Aldehyde oder Aldehydacetale aus der Substanzgruppe D),
oder anstelle der Komponenten aus den Substanzgruppen C) und D) oder anteilig mit diesen aus Verbindungen der Substanzgruppen C) und D) separat hergestellte Kondensationsprodukte,
1 bis 20 Gew.-% Alkohole aus der Substanzgruppe E),
0,01 bis 10 Gew.-% Lithium-, Natrium-, Kalium-, Magnesium-, Calcium- oder Zinkverbindungen, berechnet jeweils als Oxid, aus der Substanzgruppe F),
0 bis 40 Gew.-% Fettsäuren oder Fettsäureester aus der Substanzgruppe G),
0 bis 30 Gew.-% Kohlenwasserstoffharze aus der Substanzgruppe H),
0 bis 80 Gew.-% Naturharze oder Naturharzsäuren aus der Substanzgruppe I) umgesetzt werden.

5. Verfahren zur Herstellung von modifizierten Bindemittelharzen nach Anspruch 4, dadurch gekennzeichnet, daß in den eingesetzten fossilen Terpenharzen der Substanzgruppe A) der Gehalt an
Harzsäuren zwischen 0,1 und 45 Gew.-%,
Oxyharzsäuren zwischen 15 und 45 Gew.-%,
Terpenen und Polyterpenen zwischen 15 und 45 Gew.-%,
Terpen- und Polyterpenalkoholen zwischen 5 und 20 Gew.-%,
beträgt.

6. Verfahren zur Herstellung von modifizierten Bindemittelharzen nach Anspruch 4, dadurch gekennzeichnet, daß in den fossilen Terpenharzen der Substanzgruppe A) der Gehalt an
Kohlenstoff zwischen 70 und 80 Gew.-%,
Wasserstoff zwischen 8 und 12 Gew.-%,
Sauerstoff zwischen 8 und 14 Gew.-%,
Schwefel zwischen 0,5 und 4 Gew.-% beträgt.

7. Verfahren zur Herstellung von modifizierten Bindemittelharzen nach Anspruch 4, dadurch gekennzeichnet, daß anstelle der fossilen Terpenharze der Substanzgruppe A) ein Gemisch mit Naturharzen oder Naturharzsäuren der Substanzgruppe I) eingesetzt wird, wobei der Anteil an fossilem Terpenharz mindestens 20 Gew.-% der Mischung beträgt.

8. Verfahren zur Herstellung von modifizierten Bindemittelharzen nach Anspruch 4, dadurch gekennzeichnet, daß sie unter Verwendung von Zinkverbindungen hergestellt werden.

9. Verwendung der modifizierten Bindemittelharze nach Anspruch 1 in Druckfarben.
